# EUROPÄISCHE PATENTSCHRIFT

(11) **EP 1 994 519 B1**
(45) Veröffentlichungstag und Bekanntmachung des Hinweises auf die Patenterteilung: **06.11.2019**
(21) Anmeldenummer: 06841199.0
(22) Anmeldetag: 29.12.2006
(51) Int. Cl.: G09F 3/20, A44C 3/00, B29C 45/73

(54) **NAMENSSCHILD**
NAMEPLATE
BADGE

(30) Priorität: 24.01.2006 DE 102006003545
(43) Veröffentlichungstag der Anmeldung: 26.11.2008
(73) Patentinhaber: "Durable" Hunke & Jochheim GmbH & Co. KG, 58636 Iserlohn (DE)
(72) Erfinder: MAIER-HUNKE, Horst-Werner, 58640 Iserlohn (DE)
(74) Vertreter: Beckord & Niedlich Patentanwälte PartG mbB
(86) Internationale Anmeldenummer: PCT/EP2006/012590
(87) Internationale Veröffentlichungsnummer: WO 2007/087894

(56) Entgegenhaltungen:
- WO-A-82/03204
- DE-U1- 7 716 980
- DE-U1- 8 901 912
- JP-A- 8 085 139
- JP-A- 2000 052 390
- NL-C2- 1 008 888

## Beschreibung

### Technisches Gebiet

Die Erfindung betrifft ein Namensschild aus durchsichtigem Kunststoff mit einem Vorderteil und einem über ein erstes Joch federnd mit diesem verbundenen Rückenteil sowie mit mindestens einem in den Zwischenraum zwischen dem Vorderteil und dem Rückenteil ragenden, über ein zweites Joch mit dem Vorderteil bzw. dem Rückenteil verbundenen Haltesteg für eine von den seitlichen Rändern des Schildes in den vom Haltesteg und dem Vorderteil des Schildes gebildeten Spalt einführbare Kartoneinlage.

### Stand der Technik

Aus der WO 82/03204 A ist ein Clip mit zwei über ein Joch verbundenen Schenkeln bekannt, das als Spritzgussteil in einem Werkzeug hergestellt wird, das einen Unterteil und einen Deckel aufweist, wobei in dem Unterteil eine Kühlleitung zum Beeinflussen des Schwindungsprozesses um zwei Gussformen für jeweils einen Clip verläuft, die so angeordnet sind, dass ein seitlicher Querschnitt des Clips zur Öffnungsrichtung des Deckels weist und die Kühlleitung U-förmig um die Clips herum geführt ist. An der offenen Seite der U-Form ist die Zuleitung für den Kunststoff untergebracht, der in jeweils einen Schenkel der Clips eingeleitet wird.

Namensschilder sind beispielsweise u. a. aus der DE 89 01 912 U und der DE 199 12 788 C2 bekannt. Sie stellen Massenartikel dar, die regelmäßig nur für den einmaligen Gebrauch auf Konferenzen, Tagungen und ähnlichen Veranstaltungen bestimmt sind. Zur Herstellung der bekannten Namensschilder werden aus Polyacryl- oder PVC-Folien Zuschnitte gestanzt, deren Dicke in der Praxis maximal etwa 1 mm beträgt. Diese Zuschnitte werden zwecks Bildung der Joche partiell erwärmt und mehrfach gefalzt. Zu ihrer Herstellung sind mit anderen Worten Stanz-, Erwärmungs- und Biegevorgänge erforderlich, von denen insbesondere die Erwärmungsvorgänge aufgrund unvermeidbarer Aufheiz- und Abkühlphasen vergleichsweise viel Zeit in Anspruch nehmen. Hinzu kommt in Fällen, in denen die Schilder mit einem Herstellerhinweis versehen werden sollen, ein gesonderter Prägevorgang.

### Darstellung der Erfindung

Der Erfindung liegt die Aufgabe zugrunde, die Herstellungskosten einschlägiger Namensschilder deutlich zu reduzieren. Gelöst wird diese Aufgabe erfindungsgemäß dadurch, dass das Namenschild als Spritzgussteil ausgebildet ist, dass das Namensschild im Bereich des das Vorderteil mit dem Rückenteil verbindenden Joches mit einem Anspritzpunkt versehen ist, und, dass das Rückenteil an seiner Außenseite unterhalb des Anspritzpunktes mit einer eine Fließgrenze bildenden Nut versehen ist.

Durch den Ersatz des bisher üblichen Umformverfahrens durch das Urformverfahren Spritzgießen lassen sich die Herstellungskosten für Namensschilder der in Betracht gezogenen Gattung drastisch reduzieren, wobei dies in besonderem Maße für den Fall einer Verwendung von Mehrfach-Spritzgusswerkzeugen gilt.

Die Anwendung der Spritzgusstechnik zur Herstellung von Namensschildern ist an sich bekannt und dies insbesondere im Zusammenhang mit Namensschildern, die - wie z. B. Namensschilder gemäß der EP 0 608 043 B1 - aus zwei Teilen bestehen. Bei zwei- oder auch mehrteiligen Namensschildern kann nicht nur auf Federwirkungen verzichtet werden, sondern die Form der einzelnen Teile bringt zudem keine spritzgusstechnischen Probleme mit sich. Bekannt sind darüber hinaus aus der DE 77 16 980 U einteilige Namensschilder, die lediglich aus zwei über ein Joch miteinander verbundenen planparallelen Schenkeln bestehen, welche an ihren unteren Enden einen mehr oder weniger breiten Spalt begrenzen und folglich ebenfalls keine spritztechnischen Probleme mit sich bringen. Da bei ihnen jedoch ein Haltesteg fehlt, eignen sie sich nicht zur Halterung von Kartoneinlagen. Es war die komplizierte Form der in der DE 199 12 788 C2 offenbarten Namensschilder, die deren Herstellung im Spritzgussverfahren entgegenstand und die die Fachwelt folglich von der Anwendung der Spritzgusstechnik für derartige Namensschilder abhielt. Lag es aber aus dem genannten Grund nicht nahe, gattungsgemäße Namensschilder zu spritzen, so schließt dies logischerweise auch ein Naheliegen von Namensschildern der im Anspruch 1 definierten Art aus.

Es ist das Verdienst der Anmelderin, einen Weg aufgezeigt zu haben, der die spritztechnische Realisierung von Namensschildern gemäß dem Anspruch 1 ermöglicht. Die Anmelderin hat mit anderen Worten etwas möglich gemacht, das jahrzehntelang als unmöglich erachtet wurde, nämlich auf spritztechnischem Wege Namensschilder herzustellen, die sowohl einen sicheren Sitz des Schildes auf dem Rand eines Kleidungsstückes als auch einen sicheren Sitz der Kartoneinlage im Innern des Schildes gewährleisten und dies unter geschickter Ausnutzung des Schwindungsverhaltens des gespritzten Kunststoffteiles, das die Realisierung einer von den Jochen ausgehenden Federwirkung sowohl zwischen dem Vorder- und dem Rückenteil als auch zwischen dem jeweiligen Haltesteg und dem ihm zugewandten Vorder- oder Rückenteil ermöglicht.

Gegenstand der Erfindung ist daher auch ein Verfahren zur Herstellung des beanspruchten Namensschildes.

Weitere Merkmale und Einzelheiten der Erfindung ergeben sich aus den Unteransprüchen sowie den beigefügten Zeichnungen und deren nachstehender Beschreibung.

### Kurze Beschreibung der Zeichnungen

Es zeigen:
- Fig. 1: die Vorderansicht einer bevorzugten Ausführungsform eines Namensschildes nach der Erfindung,
- Fig. 2: die Seitenansicht des Namensschildes gemäß Figur 1,
- Fig. 3: die Rückansicht des Namensschildes gemäß den Figuren 1 und 2,
- Fig. 4: einen Schnitt längs der Linie IV - IV in Figur 3,
- Fig. 5: ein durch eine sogenannte Kombiklemme ergänztes Namensschild gemäß den Figuren 1 bis 4,
- Fig. 6: ein durch eine sogenannte Plattennadel ergänztes Namensschild gemäß den Figuren 1 bis 4,
- Fig. 7: in vergrößertem Maßstab und teilweise im Schnitt eine Einzelheit des Namensschildes gemäß Figur 6,
- Fig. 8: die wesentlichen Teile des zur Herstellung des Namensschildes gemäß den Figuren 1 bis 4 verwendeten Spritzwerkzeuges nach Abschluss des Spritzvorganges,
- Fig. 9: eine Zwischenposition von Teilen des Spritzwerkzeuges beim Öffnen des Werkzeuges,
- Fig. 10: eine sich an die in Figur 8 gezeigte Zwischenposition anschließende Zwischenposition und
- Fig. 11: die Endposition des Namensschildes vor der Entnahme aus dem Werkzeug.

### Wege zur Ausführung der Erfindung

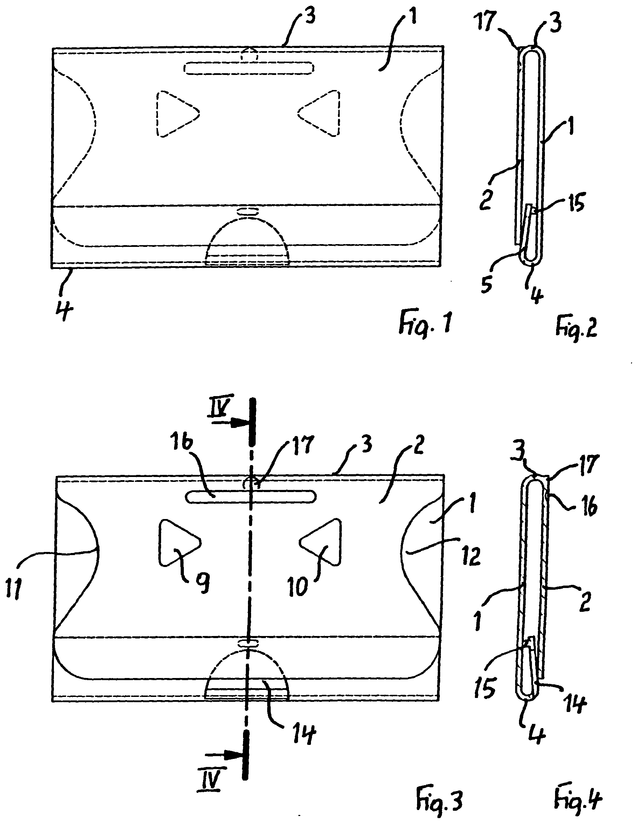

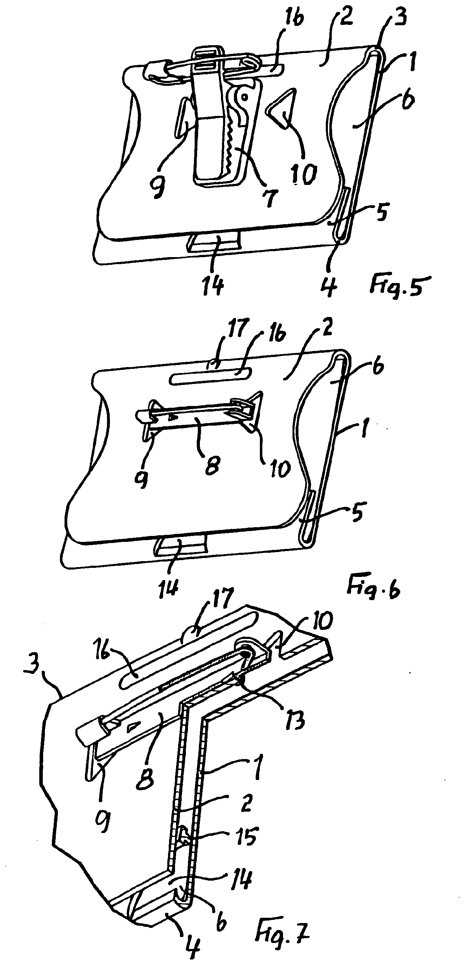

In den Figuren 1 bis 4 ist mit 1 das Vorderteil und mit 2 das Rückenteil eines Namensschildes bezeichnet. Die beiden Teile 1 und 2 sind über ein erstes Joch 3 miteinander verbunden. An den unteren Rand des Vorderteiles schließt sich über ein zweites Joch 4 ein Haltesteg für eine in den Zwischenraum zwischen dem Vorderteil 1 und dem Rückenteil 2 einschiebbare Kartoneinlage der in den Figuren 5 und 6 dargestellten Art an. Die Joche 3 und 4 bilden zusätzliche Führungen für die Kartoneinlage 6.

Das in den Figuren 1 bis 4 dargestellte Namensschild eignet sich lediglich zum Einstecken in Brusttaschen von Jacken oder Hemden. Um weitere Befestigungsmöglichkeiten zu erschließen, werden Namensschilder daher regelmäßig mit zusätzlichen Befestigungsmitteln wie der in Figur 5 gezeigten Kombiklemme 7 oder der in Figur 6 dargestellten Plattennadel 8 versehen.

Das Rückenteil 2 ist mit zwei Durchbrüchen 9 und 10 sowie mit Aussparungen 11 und 12 versehen. Sowohl die Durchbrüche 9 und 10 als auch die Aussparungen 11 und 12 erfüllen jeweils eine Doppelfunktion, indem sie einerseits während des Spritzvorganges die Möglichkeit der Abstützung eines Teils des Spritzgusswerkzeugs bieten und andererseits - soweit es sich um die Durchbrüche 9 und 10 handelt - die bequeme Befestigung der mit Krallen 13 versehenen Plattennadel 8 ermöglichen bzw. - soweit es sich um die Aussparungen 11 und 12 handelt - das Einführen und Entfernen der Kartoneinlage 6 erleichtern. Zur Abstützung eines Werkzeugteiles dient auch eine Aussparung 14 im Zentrum des Haltesteges 5, der an seinem unteren Rand mit einem Klemmnocken 15 versehen ist, der eine zusätzliche Sicherung gegen eine seitliche Verschiebung der Kartoneinlage 6 bildet. In unmittelbarer Nähe des ersten Joches 3 ist an der Außenseite des Rückenteils eine längliche Nut 16 angeordnet, die beim Spritzvorgang die Funktion einer Fließbremse für das am sogenannten Anspritzpunkt 17 in das Werkzeug mit hohem Druck eingepresste Spritzgut erfüllt.

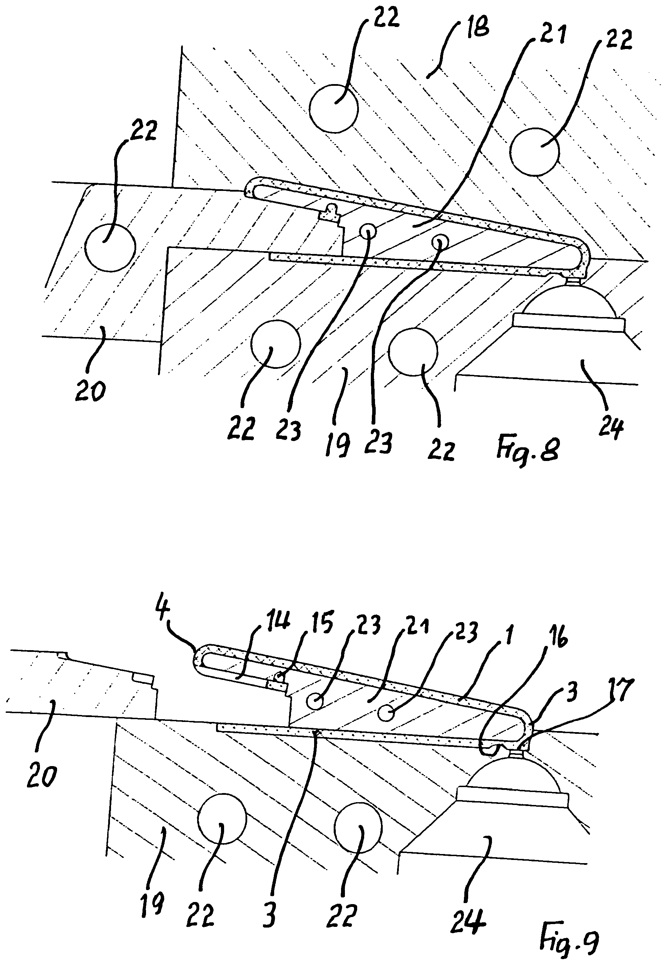

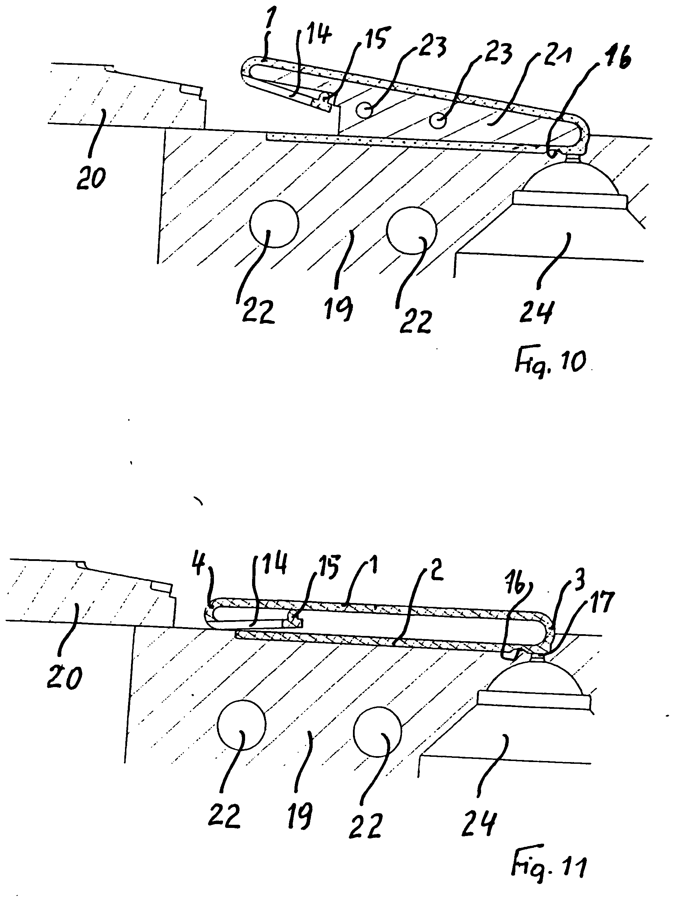

Die wesentlichen Teile des zur Herstellung des in den Figuren 1 bis 4 dargestellten Namensschildes benötigten Spritzwerkzeuges sind in den Figuren 8 bis 11 dargestellt. Bei diesen Teilen handelt es sich um zwei in das Werkzeug implementierbare Einsätze 18 und 19 sowie um zwei Schieber 20 und 21, die in zwei um 90° zueinander versetzten Richtungen hin- und herbewegbar in einem nicht dargestellten, auch zur Aufnahme der Einsätze 18, 19 dienenden Gehäuse geführt sind. Sowohl die Einsätze 18, 19 als auch die Schieber 20, 21 sind mit zur Kühlung dienenden Temperierkanälen 22 und 23 ausgestattet, von denen die in den Einsätzen 18, 19 und im Schieber 20 angeordneten Kanäle 22 einen deutlich größeren Querschnitt aufweisen als die Kanäle 23 im Schieber 21. Der Schieber 21 hat während des Spritzprozesses folglich eine spürbar höhere Temperatur als der Schieber 20 und die Einsätze 18 und 19. Die unterschiedlichen Temperaturen sind, wie eingangs bereits erwähnt, von entscheidender Bedeutung für das angewendete Herstellungsverfahren, denn sie führen dazu, dass es beim Öffnen des Werkzeuges aufgrund der schnelleren Abkühlung der Außenseiten des Vorderteiles 1 und des Rückenteiles 2 zu unterschiedlichen Schwindungsprozessen kommt, und dies mit der Folge, dass nach dem Entfernen des Schiebers 21 aus der in Figur 10 gezeigten Position nicht nur das Vorderteil 1 und das Rückenteil 2, sondern auch der Haltesteg 5 aus der in den Figuren 8 bis 10 dargestellten, gespreizten Position automatisch in die in Figur 11 gezeigte, gebrauchsfertige Position übergehen. Der normalerweise unerwünschte Verzug des Spritzgussteiles wird mit anderen Worten beim hier beschriebenen Verfahren genutzt, um das Namensschild überhaupt herstellen zu können. Würde die von den Einsätzen 18, 19 und den Schiebern 20, 21 begrenzte Kavität des Werkzeuges nämlich der endgültigen Form des Namensschildes entsprechen, dann würde die Stabilität des Schiebers 21 nicht ausreichen, um dem zur Erzeugung eines dünnwandigen Teiles, wie einem Namenschild, erforderlichen Spritzdruck standzuhalten.

Da sich das sich im Bereich der Spritzdüse 24 befindliche Material nach wie vor in einem viskosen Zustand befindet, kann das fertige Namensschild problemlos entweder durch Ausstoßstempel oder durch Saugvorrichtungen aus dem Werkzeug entfernt werden. Um ein möglichst sauberes Aussehen des Anspritzpunktes 17 zu erreichen, empfiehlt sich die Verwendung einer Nadelverschlussdüse, deren Nadel mit ihrer Stirnseite die Bildung einer glatten Oberfläche im Bereich des Anspritzpunktes 17 begünstigt.

## Patentansprüche

1. Namensschild aus durchsichtigem Kunststoff mit einem Vorderteil (1) und einem über ein erstes Joch (3) federnd mit diesem verbundenen Rückenteil (2) sowie mit mindestens einem in den Zwischenraum zwischen dem Vorderteil (1) und dem Rückenteil (2) ragenden, über ein zweites Joch (4) mit dem Vorderteil (1) bzw. dem Rückenteil (2) verbundenen Haltesteg (5) für eine von den seitlichen Rändern des Schildes in den vom Haltesteg (5) und dem Vorderteil (1) des Schildes gebildeten Spalt einführbare Kartoneinlage, **dadurch gekennzeichnet, dass** das Namensschild als Spritzgussteil ausgebildet ist, dass das Namensschild im Bereich des das Vorderteil (1) mit dem Rückenteil (2) verbindenden Joches (3) mit einem Anspritzpunkt (17) versehen ist, und dass das Rückenteil (2) an seiner Außenseite unterhalb des Anspritzpunktes (17) mit einer eine Fließgrenze bildenden Nut (16) versehen ist.

2. Namensschild nach Anspruch 1, **dadurch gekennzeichnet, dass** der Haltesteg (5) mindestens eine zum ihn mit dem Vorderteil (1) des Schildes verbindenden Joch (4) offene Aussparung (14) aufweist.

3. Namensschild nach einem der Ansprüche 1 bis 2, **dadurch gekennzeichnet, dass** der Haltesteg (5) auf seiner dem Vorderteil (1) zugewandten Seite mindestens einen Klemmnocken (15) für die Kartoneinlage (6) aufweist.

4. Namensschild nach Anspruch 3, **dadurch gekennzeichnet, dass** der Klemmnocken (15) in der Nähe des Randes des Haltesteges (5) angeordnet ist, der dem den Haltesteg (5) mit dem Vorderteil (1) verbindenden Joch (4) gegenüberliegt.

5. Namensschild nach einem der Ansprüche 1 bis 4, **dadurch gekennzeichnet, dass** das Rückenteil (2) mindestens einen Durchbruch (9, 10) aufweist.

6. Namensschild nach einem der Ansprüche 1 bis 5, **dadurch gekennzeichnet, dass** das Rückenteil (2) an seinen sich gegenüberliegenden Seitenrändern mit Aussparungen (11, 12) versehen ist.

## Claims

1. Nameplate made from transparent plastic with a front part (1) and a rear part (2) which is connected resiliently to the former via a first yoke (3) as well as at least one retaining bar (5), protruding into the intermediate space between the front part (1) and the rear part (2) and connected to the front part (1) and the rear part (2) via a second yoke (4), for a cardboard insert insertable from the lateral edges of the nameplate into the gap formed by the retaining bar (5) and the front part (1) of the nameplate, **characterised in that** the nameplate is in the form of an injection moulded part, **in that** in the region of the yoke (3) connecting the front part (1) with the rear part (2) the nameplate is provided with an injection point (17), and **in that** on its outer side under the injection point (17) the rear part (2) is provided with a groove (16) forming a deflector.

2. Nameplate according to claim 1 **characterised in that** the retaining bar (5) comprises at least one recess (14) open to the yoke (4) connecting it to the front part (1).

3. Nameplate according to any one of claims 1 to 2 **characterised in that** on its side facing the front part (1) the retaining bar (5) has at least one clamping cam (15) for the cardboard insert (6).

4. Nameplate according to claim 3 **characterised in that** the clamping cam (15) is arranged in the vicinity of the edge of the retaining bar (5) which is opposite the yoke (4) connecting the retaining bar (5) to the front part (1).

5. Nameplate according to any one of claims 1 to 4 **characterised in that** the rear part (2) has as least one aperture (9, 10).

6. Nameplate according to any one of claims 1 to 5 **characterised in that** the rear part (2) is provided with recesses (11, 12) on its opposite lateral edges.

## Revendications

1. Badge nominatif en matière plastique transparente, pourvu d'une face avant (1) et d'une face arrière (2) assemblée de manière élastique par l'intermédiaire d'un premier étrier (3) avec celle-ci et pourvu d'au moins une barrette de maintien (5) saillant dans l'espace intermédiaire entre la face avant (1) et la face arrière (2), assemblée par l'intermédiaire d'un deuxième étrier (4) avec la face avant (1) ou la face arrière (2) pour un insert en carton susceptible d'être introduit dans les bords latéraux du badge dans la fente formée par la barrette de maintien (5) et la face avant (1) du badge, **caractérisé en ce que** le badge nominatif est conçu sous la forme d'une pièce moulée par injection, **en ce que** dans la zone de l'étrier (3) assemblant la face avant (1) avec la face arrière (2), le badge est muni d'un point d'injection (17), et **en ce que** la face arrière (2) est munie sur son côté extérieur, en dessous du point d'injection (17) d'une rainure (16) formant une limite d'écoulement.

2. Badge nominatif selon la revendication 1, **caractérisé en ce que** la barrette de maintien (5) comporte au moins une encoche (14) ouverte sur l'étrier (4) l'assemblant avec la face avant (1) du badge.

3. Badge nominatif selon l'une quelconque des revendications 1 à 2, **caractérisé en ce que** sur son côté dirigé vers la face avant (1), la barrette de maintien (5) comporte au moins un came de serrage(15) pour l'insert en carton (6).

4. Badge nominatif selon la revendication 3, **caractérisé en ce que** l'came de serrage(15) est placé à proximité du bord de la barrette de maintien (5) qui est opposé à l'étrier (4) assemblant la barrette de maintien (5) avec la face avant (1).

5. Badge nominatif selon l'une quelconque des revendications 1 à 4, **caractérisé en ce que** la face arrière (2) comporte au moins un ajour (9, 10).

6. Badge nominatif selon l'une quelconque des revendications 1 à 5, **caractérisé en ce que** sur ses bords latéraux opposés, la face arrière (2) est munie d'encoches (11, 12).
